(19) Europäisches Patentamt
European Patent Office
Office européen des brevets

(11) Veröffentlichungsnummer: **0 597 277 A1**

(12) # EUROPÄISCHE PATENTANMELDUNG

(21) Anmeldenummer: **93116770.4**

(22) Anmeldetag: **18.10.93**

(51) Int. Cl.[5]: **G02F 1/35**, C08F 8/00, C08F 8/30, C08F 220/58, C09B 69/10

(30) Priorität: **07.11.92 DE 4237639**

(43) Veröffentlichungstag der Anmeldung: **18.05.94 Patentblatt 94/20**

(84) Benannte Vertragsstaaten: **BE CH DE ES FR GB IT LI NL**

(71) Anmelder: **BASF Aktiengesellschaft**
**Carl-Bosch-Strasse 38**
**D-67063 Ludwigshafen(DE)**

(72) Erfinder: **Etzbach, Karl-Heinz, Dr.**
**Jean-Ganss-Strasse 46**
**D-67227 Frankenthal(DE)**
Erfinder: **Beckmann, Stefan, Dr.**
**Neckarpromenade 16**
**D-68167 Mannheim(DE)**

(54) **Verfahren zur Herstellung von Polymeren mit NLO-aktiven Seitengruppen und deren Verwendung.**

(57) Die Erfindung betrifft ein Verfahren zur Herstellung von (Meth)acrylatpolymerisaten mit seitenständigen nichtlinear optischen Chromophoren und Molekulargewichten zwischen 5000 und 500.000, wobei man Polymerisate des (Meth)acryloylisocyanats in polymeranaloger Reaktion in Lösung mit D-ω-Hydroxyalkyl-Chromophoren der allgemeinen Formel (I) umsetzt,

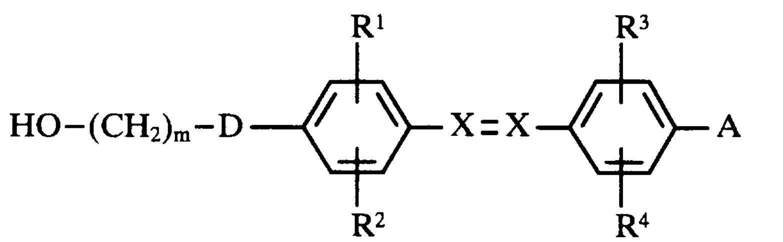

(I)

worin

| | |
|---|---|
| D | für einen Elektronendonor, |
| A | für einen Elektronenakzeptor, |
| $R^1$, $R^2$, $R^3$ und $R^4$ | untereinander gleich oder verschieden sein können und für H, Alkyl, Cycloalkyl, Alkoxy oder $R^3$, $R^4$ für CN, $NO_2$ oder CHO stehen oder $R^1$ mit $R^2$ bzw. $R^3$ mit $R^4$ miteinander einen anellierten Ring bilden. |
| X | für CH-Gruppen oder/und N-Atome |

und

m für eine ganze Zahl von 2 bis 11 stehen.

Die Verfahrensprodukte eignen sich für optische Bauelemente in der Nachrichtentechnik.

EP 0 597 277 A1

Die vorliegende Erfindung betrifft ein Verfahren zur Herstellung von (Meth)acrylatpolymerisaten mit seitenständigen nichtlinear optischen Chromophoren und Molekulargewichten zwischen 5000 und 500000, die nach diesem Verfahren erhaltenen Polymerisate sowie deren Verwendung in optischen Bauelementen, insbesondere in der Nachrichtentechnik.

Polymerisate mit seitenständigen nicht linear optischen Chromophoren und deren Herstellung durch radikalisch initiierte Polymerisation von ethylenisch ungesättigten organischen Verbindungen (Methacryl- und Acrylverbindungen), die nichtlinear optische (= NLO) Chromophore als Seitengruppen tragen, sind bereits bekannt und beispielsweise beschrieben von D.R. Robello in J. Polym. Sci.; Part A = Polymer Chemistry 28, 1 (1990) sowie in EP-A-0337405, EP-A-0334176, EP-A-0396172, FR-A-02630744, FR-A-2597109 und EP-A-0478268.

Bei der radikalischen Polymerisation von Monomeren mit NLO-Seitengruppen erhält man jedoch infolge der retardierenden Wirkung von Nitro- und Azogruppen nur Produkte mit relativ niedrigen Molekulargewichten von bis zu etwa $\overline{M}_n$ = 25000. Ein weiterer Nachteil ist, daß sich derartige Produkte nicht gut reproduzierbar herstellen lassen. Aus der US-A-4 935 292 sind zwar auch schon funktionalisierte Polymere mit nichtlinear optischen Eigenschaften bekannt, die durch polymeranaloge Umsetzung von Polystyrol, das zunächst chlormethyliert, dann in das reaktivere Iodmethylderivat überführt wird, das schließlich mit dem Thalliumsalz eines Alkoholchromophors verethert, oder durch Umsetzung mit einem Pyridiniumchromophor quaterniert wird, erhalten werden. Außerdem wird hier die Funktionalisierung von Poly(p-hydroxistyrol) angeführt, wobei über eine nucleophile Substitution des Phenolations des Poly(p-hydroxistyrol)s an das Tosylat des Chromophors das Chromophor über eine Ethergruppe an das Poly(p-hydroxystyrol) angebunden wird. Die in der US-A-4 935 292 beschriebenen Methoden zur Herstellung von Polymeren mit nichtlinear optischen Eigenschaften sind ziemlich aufwendig und bedürfen wegen der Giftigkeit des Thalliums umfangreicher Schutzmaßnahmen. Außerdem sind hier Einschränkungen hinsichtlich der erreichbaren Molekulargewichte der Polymeren und auch auf die Art der Polymeren gegeben. Über polymeranaloge Reaktionen sind neben den erwähnten Polymethacrylaten die Polyacrylate ebenfalls zugänglich. Dem US-Patent sind jedoch keine Angaben über die Molekulargewichtsverteilung und die Repoduzierbarkeit der darin beschriebenen Polymerisate zu entnehmen.

Bei den in der älteren DE-A-41 16 594 beschriebenen polymeranalogen Reaktionen werden Nebenprodukte, wie z.B. HCl, frei, die sich störend auf die Polymermatrix, insbesondere im Hinblick auf optische Anwendungen, auswirken können.

Aufgabe der vorliegenden Erfindung ist es, ein Verfahren zur Herstellung von (Meth)-acrylatpolymerisaten mit seitenständigen nichtlinear optischen Chromophoren aufzuzeigen, das die oben angeführten Nachteile des vorbekannten Standes der Technik nicht oder im wesentlich verringerten Maße aufweist und sich insbesondere durch die Einfachheit des Verfahrens an sich, die von Nebenprodukten freie Reaktion zur polymeranalogen Anbindung, die gute Reproduzierbarkeit, ein hohes Molekulargewicht sowie eine enge Molekulargewichtsverteilung der so erhaltenen Materialien auszeichnet.

Diese Aufgabe läßt sich überraschenderweise sehr vorteilhaft durch die polymeranaloge Reaktion von (Meth)acryloylisocyanatpolymerisaten mit D-ω-Hydroxyalkyl-Chromophoren lösen.

Gegenstand der vorliegenden Erfindung ist ein Verfahren zur Herstellung von (Meth)acrylat-Polymerisaten mit seitenständigen nichtlinear optischen Chromophoren und Molekulargewichten $\overline{M}_w$ zwischen 5000 und 500000, dadurch gekennzeichnet, daß man Polymerisate des (Meth)acryloylisocyanats in polymeranaloger Reaktion in Lösung mit D-ω-Hydroxyalkyl-Chromophoren der allgemeinen Formel (I) umsetzt

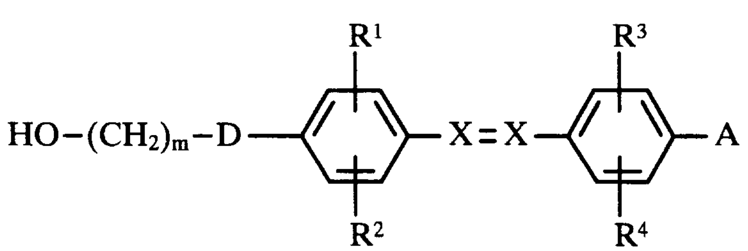

(I) ,

worin

| | |
|---|---|
| D | für einen Elektronendonor, |
| A | für einen Elektronenakzeptor, |
| $R^1$, $R^2$, $R^3$ und $R^4$ | untereinander gleich oder verschieden sein können und für H, Alkyl mit 1 bis 6 Kohlenstoffatomen, Cycloalkyl mit 5 oder 6 Kohlenstoffatomen, Alkoxy mit 1 bis 4 |

Kohlenstoffatomen oder $R^3$ und $R^4$ für CN, $NO_2$ oder CHO stehen oder $R^1$ mit $R^2$ bzw. $R^3$ mit $R^4$ miteinander einen anellierten Ring bilden,

X für CH-Gruppen oder/und N-Atome

und

m für eine ganze Zahl von 2 bis 11, vorzugsweise 2 bis 8 stehen.

Bevorzugte Ausführungsformen des erfindungsgemäßen Verfahrens bestehen darin, nichtlinear optische D-ω-Hydroxyalkyl-Chromophore der allgemeinen Formel (I) mit Copolymerisaten aus (Meth)-acryloylisocyanat und Methacrylsäureestern oder mit Copolymerisaten aus (Meth)acryloylisocyanat und Acrylsäureestern, beispielsweise mit Copolymerisaten aus (Meth)acryloylisocyanat und Adamantylacrylat oder Adamantylmethacrylat umzusetzen.

Weitere Ausführungsformen des erfindungsgemäßen Verfahrens bestehen darin, daß man die Umsetzung der Alkohole der allgemeinen Formel (I) mit den Polymerisaten des (Meth)acryloylisocyanats so führt, daß nach der Umsetzung noch Isocyanatfunktionen im Polymerisat vorhanden sind, die anschließend zu Urethangruppen umgesetzt werden oder über eine weitere polymeranaloge Umsetzung weiter funktionalisiert werden können, bzw. daß die nach der Umsetzung im Polymerisat noch vorhandenen Isocyanatgruppen über eine weitere polymeranaloge Umsetzung mit vernetzbaren Alkoholen oder vernetzbaren Aminen zur Reaktion gebracht werden.

Dabei kann man als vernetzbare Alkohole oder vernetzbare Amine insbesondere solche einsetzen, die am alkoholischen Sauerstoff bzw. am Amin-Stickstoff folgende Gruppierungen gebunden enthalten:

$H_2C=CH-CH_2-$,

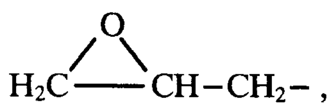 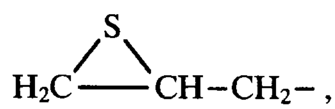

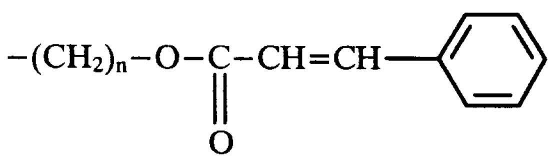 , 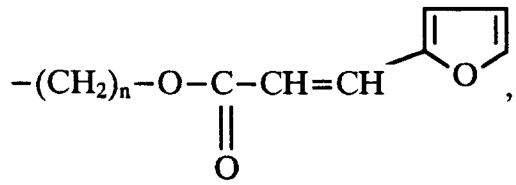

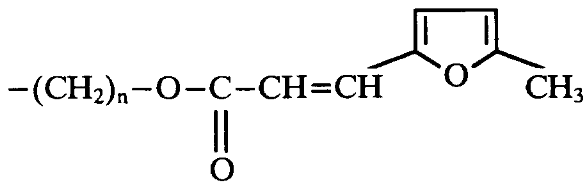 , 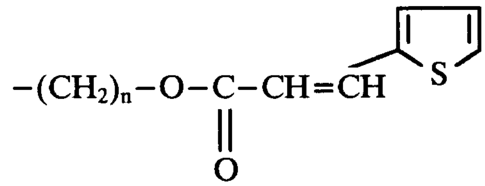 ,

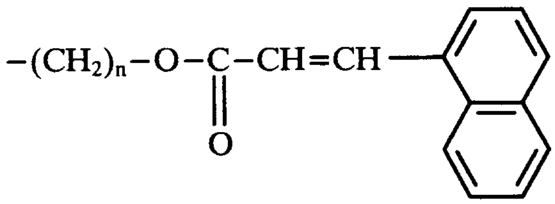 , 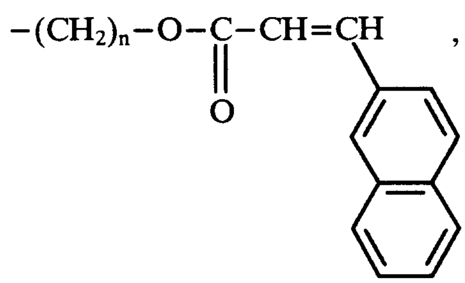 ,

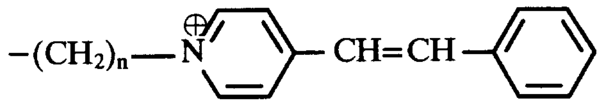 ,

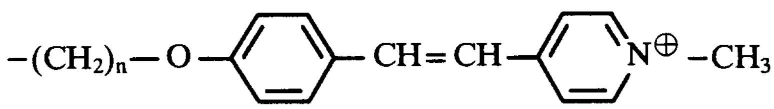 ,

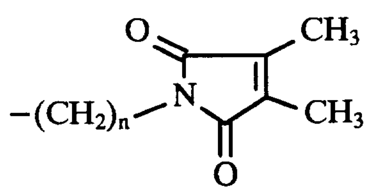 , 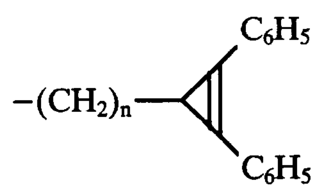 oder

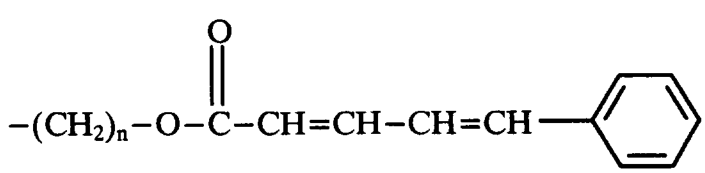

mit n = O bis 10.

Gegenstand der vorliegenden Erfindung sind auch Polymerisate, die wiederkehrende Einheiten der allgemeinen Formel (II) eingebaut enthalten oder hieraus aufgebaut sind,

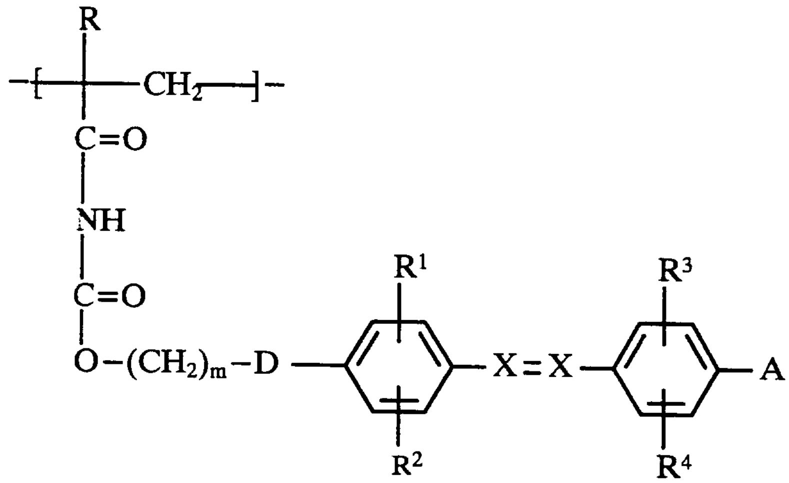

(II)

worin D, A, X, m, $R^1$, $R^2$, $R^3$ und $R^4$ die oben angegebene Bedeutung haben und R für ein Wasserstoffatom oder eine Methylgruppe steht, wobei diese Polymerisate nach einem der erfindungsgemäßen Verfahren hergestellt worden sind.

Bevorzugt sind auch derart hergestellte Polymerisate, bei denen D für $NR^5$ oder O, -X=X- für -N=N-, -N=CH-, -CH=N- oder -CH=CH-, A für H, $NO_2$, CN, CHO,

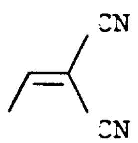 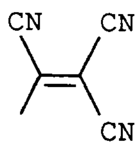 oder 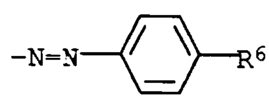 ,

$R^5$ für $C_1$-$C_6$-Alkyl oder -Alkenyl, $C_5$- bis $C_7$-Cycloalkyl, Phenyl, Benzyl, Tolyl oder eine vernetzungsfähige Gruppe und

$R^6$ für H, $NO_2$, CN oder CHO stehen und die als vernetzungsfähige Gruppe $R^5$ eine Vinyl-, Allyl-, Methallyl-, Methacryloyl-, Acryloyl-, $-(CH_2)_n-O-CO-CH=CH_2$, $-(CH_2)_n-O-CO-C(CH_3)=CH_2$ mit n = 1 bis 8, Oxiranyl- oder Thiiranylgruppe enthalten.

Die erfindungsgemäß hergestellten Polymerisate können nur aus wiederkehrenden Einheiten der allgemeinen Formel (II) aufgebaut sein oder sie können zusätzlich zu den wiederkehrenden Einheiten der allgemeinen Formel (II) noch weitere wiederkehrende Comonomer-Einheiten eingebaut enthalten.

Gegenstand der vorliegenden Erfindung ist auch die Verwendung der erfindungsgemäß hergestellten nichtlinear optischen Polymerisate in optischen Bauelementen, sowie deren Verwendung in der Nachrichtentechnik.

Das erfindungsgemäße Verfahren zeichnet sich insbesondere dadurch aus, daß sich auf diesem Wege Polymerisate frei von Nebenprodukten wie HCl und damit gut reproduzierbar mit hohen Molekulargewichten herstellen lassen.

Hohe Molekulargewichte sind wünschenswert, da sich nur daraus hochwertige Filme, wie sie für Anwendungen in der nichtlinearen Optik benötigt werden, herstellen lassen. Außerdem wird die Relaxation der NLO-aktiven Gruppen nach der Ausrichtung im elektrischen Feld bei höhermolekularen Polymeren deutlich zurückgedrängt.

Während die Herstellung von polymerisierbaren ethylenisch ungesättigten monomeren Verbindungen mit nichtlinear optischen Chromophorgruppen, insbesondere hinsichtlich ihrer Reinigung, die durch Säulenchromatographie und anschließendes Umkristallisieren unter erheblichem Zeit- und Materialaufwand (großer Lösungsmittelverbrauch) erfolgen muß, sehr aufwendig ist, ist die Reinigung der zugrundeliegenden die Chromophorgruppen enthaltenden Alkohole, die durch einfaches Umkristallisieren, beispielsweise aus Toluol oder Pyridin/Ethanol (1:4) praktisch analysenrein erhalten werden können, viel einfacher. Auch wenn diese Alkohole noch kleine Mengen an Verunreinigungen enthalten, können sie für die polymeranaloge Umsetzung ohne Nachteile für die Folgeprodukte eingesetzt werden, was für die Herstellung der Produkte im technischen Maßstab von besonderem Vorteil ist.

Zum erfindungsgemäßen Verfahren ist im einzelnen folgendes auszuführen.

Homo- und Copolymere des Acryl- oder Methacryloylisocyanats lassen sich nach üblichen Verfahren, beispielsweise durch radikalische Polymerisation in Lösung aus den Monomeren quantitativ herstellen. Als Lösungsmittel kommen übliche gegenüber Isocyanatfunktionen inerte organische Lösungsmittel, wie z.B. Ether, wie Dioxan oder Tetrahydrofuran, Dimethylformamid, N-Methylpyrrolidon, aromatische Kohlenwasserstoffe, wie z.B. Benzol oder Toluol sowie Chlorbenzol und deren Gemische in Frage.

Als Comonomere, die praktisch in allen Mengenverhältnissen mit (Meth)acryloylisocyanat copolymerisiert werden können, kommen in Frage Ester der Acryl- und der Methacrylsäure mit 1 bis 18, vorzugsweise 1 bis 8 Kohlenstoffatome enthaltenden Alkoholen, wie z.B. Methylmethacrylat, Ethylacrylat, n- und i-Butylacrylat, Hexylacrylat, 2-Ethyl-hexylacrylat sowie Vinylaromaten, wie z.B. Styrol, oder auch andere mit (Meth)acryloylisocyanat copolymerisierbare ethylenisch ungesättigte Verbindungen sowie Gemische derartiger copolymerisierbarer ethylenisch ungesättigter organischer Verbindungen. Es ist zweckmäßig, die einzusetzenden Monomeren vor der Polymerisation nach den dem Fachmann geläufigen Methoden, z.B. durch Destillation oder Umkristallisieren zu reinigen. Die Homo- bzw. Copolymerisation des (Meth)-acryloylisocyanats erfolgt üblicherweise in Gegenwart radikalliefernder Katalysatoren, wie z.B. Azodiisobutyronitril, Peroxide, wie Dibenzoylperoxid oder Dilaurylperoxid.

Durch entsprechende Auswahl der Art und Menge an Comonomeren und der Polymerisationsbedingungen, wie Temperatur, Lösungsmittelanteil oder Polymerisationskatalysatormenge lassen sich in der dem Fachmann geläufigen Weise die Eigenschaften und Molekulargewichte der (Meth)-acryloylisocyanatpolymerisate beeinflussen und gezielt einstellen.

Es ist besonders vorteilhaft, die Molekulargewichte dieser Polymerisate auf Bereiche zwischen $\overline{M}_w$ = 10000 und 200000 einzustellen.

Die (Meth)acryloylisocyanatpolymerisate können vorteilhafterweise in situ - ohne Zwischenisolierung - in polymeranaloger Reaktion in Lösung mit D-ω-Hydroxyalkyl-Chromophoren der allgemeinen Formel (I),

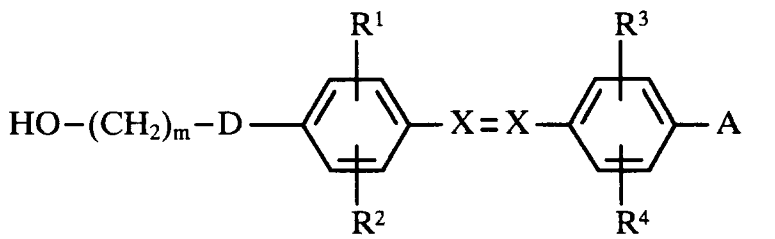

(I)

worin

| | |
|---|---|
| D | für einen Elektronendonor, |
| A | für einen Elektronenakzeptor, |
| X | für eine CH-Gruppe oder/und N-Atome, |
| $R^1$, $R^2$, $R^3$ und $R^4$ | untereinander gleich oder verschieden sein können und für H, Alkyl mit 1 bis 6 Kohlenstoffatomen, Cycloalkyl mit 5 oder 6 Kohlenstoffatomen, Alkoxy mit 1 bis 4 Kohlenstoffatomen oder $R^3$ und $R^4$ für CN, $NO_2$ oder CHO stehen, oder $R^1$ mit $R^2$ bzw. $R^3$ mit $R^4$ miteinander einen anellierten Ring bilden. |

und

m für eine ganze Zahl von 2 bis 11, vorzugsweise 2 bis 8 stehen, umgesetzt werden.

Die Umsetzung der D-ω-Hydroxyalkyl-Chromophoren mit dem Homopolymer Poly(meth)-acryloylisocyanat bzw. mit den Copolymeren aus (Meth)acrylcylisocyanat und Methylmethacrylat kann beispielsweise bei Temperaturen zwischen 10 und 30 °C erfolgen. Die Polymeren können beispielsweise in Methanol/HCl ausgefällt und dreimal aus THF/Methanol umgefällt werden.

In der allgemeinen Formel (I) für die D-ω-Hydroxyalkyl-Chromophorekann der Elektronendonor D für Sauerstoff oder eine zweiwertige Gruppe $NR^5$, wobei $R^5$ für einen Alkylrest mit 1 bis 6 Kohlenstoffatomen, beispielsweise Methyl, Ethyl, Butyl, Hexyl, einen $C_1$-$C_6$-Alkenylrest, z.B. Allyl, Hexenyl, für einen Cycloalkylrest mit 5 bis 7 Kohlenstoffatomen, wie z.B. Cyclohexyl, Phenyl, Benzyl, Tolyl oder eine vernetzungsfähige Gruppe, wie z.B. eine Vinyl-, Allyl-, Methallyl, Acryloyl-, Methacryloyl-, $-(CH_2)_n-O-CO-CH=CH_2$, $-(CH_2)_n-O-CO-C(CH_3)=CH_2$ mit n = 1 bis 8, Oxiranyl- oder Thiiranylgruppe, beispielsweise

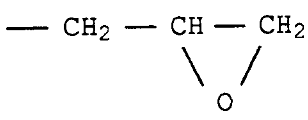 oder 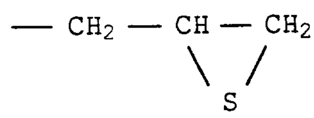

stehen.

Der Elektronenakzeptor A in der allgemeinen Formel (I) kann für Wasserstoff, $NO_2$, CN, CHO oder eine der Gruppierungen

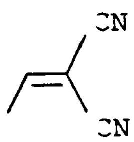 , 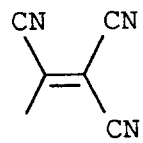 oder 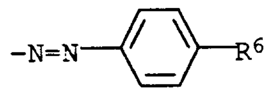 ,

mit $R^6$ = H, $NO_2$, CN oder CHO stehen.

$R^1$, $R^2$, $R^3$ und $R^4$ in den allgemeinen Formeln (I) bzw. (II) können für Wasserstoff, Alkylgruppen mit 1 bis 6 Kohlenstoffatomen, beispielsweise Methyl, Ethyl, Isopropyl, n-Butyl, Isobutyl, Hexyl, Cycloalkyl mit 5 oder 6 Kohlenstoffatomen, wie z.B. Cyclohexyl stehen oder $R^1$ kann mit $R^2$ bzw. $R^3$ mit $R^4$ miteinander einen anellierten Ring bilden, z.B. Naphthyl.

Beispiele für derartige D-ω-Hydroxyalkyl-Chromophore sind

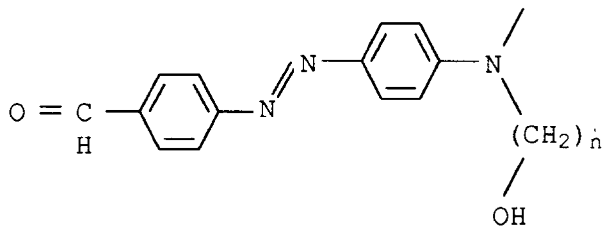

n = 2, 3, 4, 6

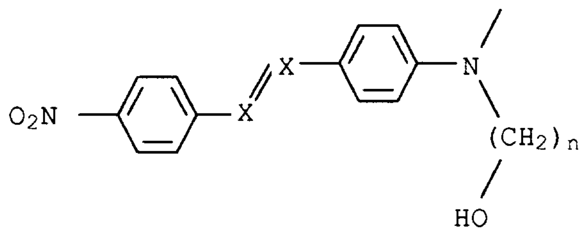

X = N, CH n = 2, 3, 4, 6

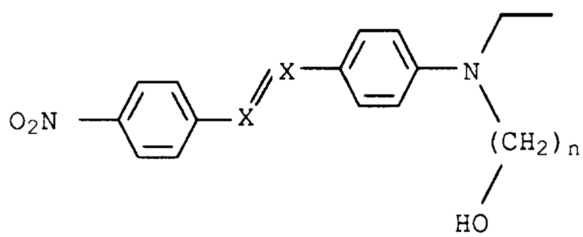

X = N, CH n = 2, 3, 4, 6

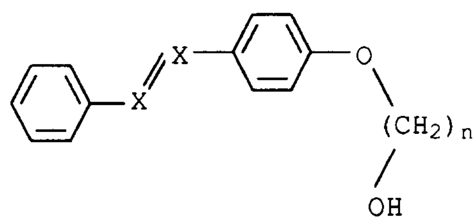

X = N, CH n = 2, 3, 6, 8, 11

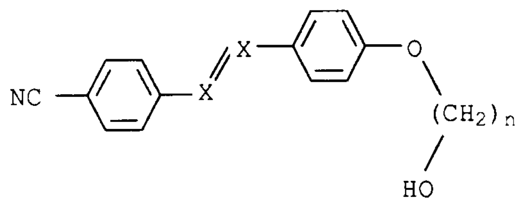

X = N, CH　　　　n = 2, 3, 6, 8, 11

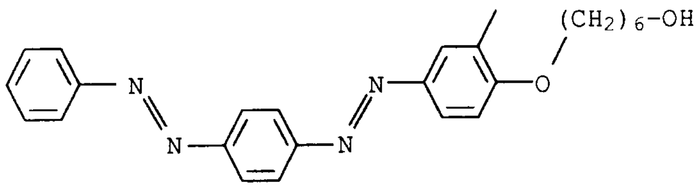

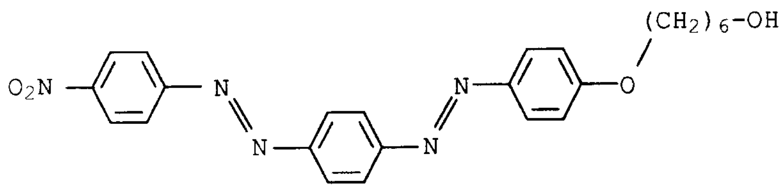

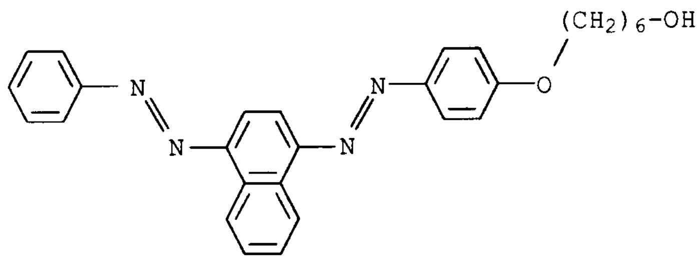

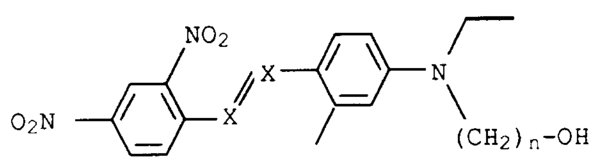

n = 2, 3, 4, 5　　　　X = N, CH

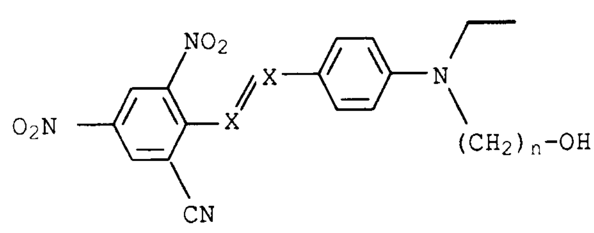

X = N, CH　　　　n = 2, 3, 4, 5

Ein weiterer Vorteil des erfindungsgemäßen Verfahrens ist die Möglichkeit, die Relaxation der funktionellen Gruppen zu verhindern, und zwar durch die an eine Polung angeschlossene Vernetzung des Polymeren. Die Einführung von vernetzbaren Gruppen in ein Polymethacrylat durch polymeranaloge Umsetzung ist sehr viel einfacher als die entsprechende Terpolymerisation.

Mögliche zur Vernetzung geeignete Gruppen $R^5$ der obengenannten Arten sind z.B.

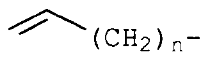 , 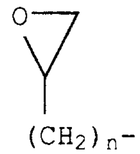 , 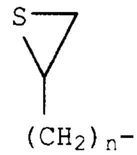

mit n = 2 bis 10
und die oben bereits genannten Zimtsäure-, Styrol-, Maleinimid- und Cyclopropangruppen.

Beispiele für Präpolymerzusammensetzungen, die für die Umsetzung mit den Chromophoralkoholen eingesetzt werden können sind:

| | X | Y |
|---|---|---|
| 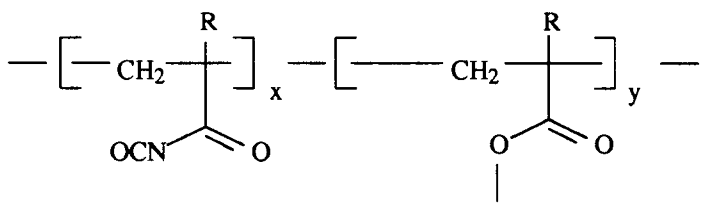 | 1,0 | 0,0 |
| | 0,5 | 0,5 |
| | 0,4 | 0,6 |
| | 0,3 | 0,7 |
| | 0,2 | 0,8 |
| | 0,1 | 0,9 |

Mit dem erfindungsgemäßen Verfahren ist die Synthese genau definierter Präpolymerer mit hohen Molekulargewichten und enger Molekulargewichtsverteilung möglich, wobei hohe Glastemperaturen erreicht werden.

Weitere Vorteile des erfindungsgemäßen Verfahrens sind die gute Reproduzierbarkeit bei der Darstellung der Polymeren, die leichtere Darstellung aufgrund der verminderten Anzahl an Reinigungsschritten der ω-Hydroxyalkylchromophore, die schnelle Reaktionsführung, die Einsparung von Lösungsmitteln, da Säulenchromatographien entfallen, sowie die leichte Weiterfunktionalisierung, d.h. Einführung weiter funktioneller Gruppen.

Die in den folgenden Beispielen genannten Teile und Prozente sind, soweit nicht anders angegeben, Gewichtsteile bzw. Gewichtsprozente.

Herstellung verschiedener Polymerer mit seitenständigen nichtlinear optischen Chromophoren.

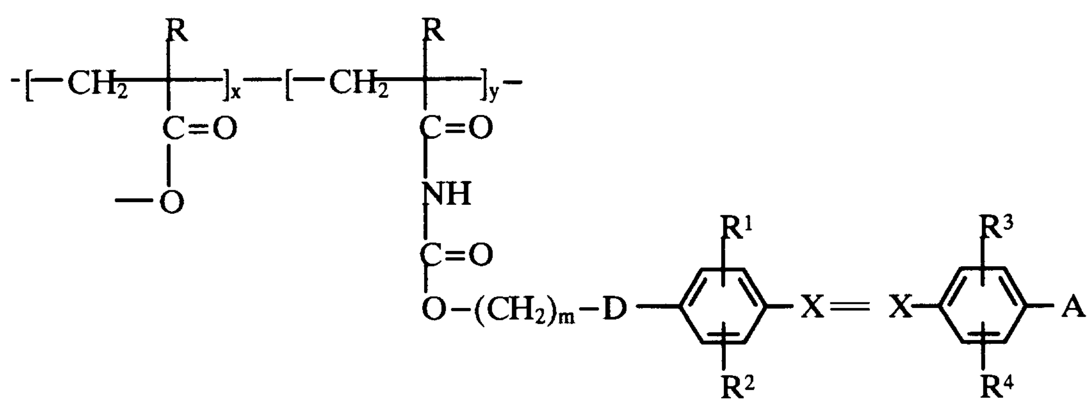

Beispiel 1
x = 0,5; y = 0,5

In ein 300 ml-Schlenkrohr, welches zuvor von Wasserresten und Luftsauerstoff befreit worden ist, füllt man 11,1 g (0,1 mol) frisch destilliertes Methacryloylisocyanat, 10,0 g (0,1 mol) frisch destillierten Methacrylsäuremethylester, 0,164 g (0,001 mol) Azodiisobutyronitril (= AIBN) und 100 ml Toluol ein. Die Lösung wird sorgfältig mit trockenem Stickstoff entgast und dann bei 60 °C 48 Stunden lang polymerisiert. Anschließend wird auf 20 °C abgekühlt und mit einer Lösung von 37 g (0,1 mol) 4-(N-Hydroxyhexyl-N-methyl-amino)-4'-nitroazobenzol in 100 ml trockenem Toluol im Stickstoffgegenstrom versetzt. Daraufhin wird 1 Stunde bei 20 °C gerührt und anschliessend durch Eingießen in Methanol gefällt. Zur Reinigung fällt man das Polymer noch dreimal aus Tetrahydrofuran (THF) in Methanol um.
Ausbeute = 48,3 g (83,4 %).

| Elementaranalyse: | | | | |
|---|---|---|---|---|
| berechnet:<br>gefunden: | C 61,96<br>C 60,98 | H 6,71<br>H 6,92 | N 12,05<br>N 11,88 | O 19,28<br>O 20,22 |

GPC: $\overline{M}_w$ = 24000 (GPC = Gelpermeationschromatographie)
($\overline{M}_w$ = mittleres Molekulargewicht)
$T_G$: 145 °C ($T_G$ = Glastemperatur)

Beispiel 2
x = 0,8; y = 0,2

In einem 300 ml-Schlenkrohr, welches zuvor von Wasserresten und Luftsauerstoff befreit worden ist, füllt man 2,22 g (0,02 mol) frisch destilliertes Methacryloylisocyanat, 8 g (0,08 mol) Methacrylsäuremethylester, 0,164 g (0,001 mol) Azodiisobutyronitril und 100 ml trockenes Toluol ein. Die Lösung wird sorgfältig mit trockenem Stickstoff entgast und dann bei 60 °C 48 Stunden lang polymerisiert. Anschließend wird auf 20 °C abgekühlt und mit einer Lösung von 7,4 g (0,02 mol) 4- (N-Hydroxyhexyl-N-methyl-amino)-4'-nitroazobenzol in 70 ml trockenem Toluol im Stickstoffgegenstrom versetzt. Anschließend wird 1 Stunde bei 20 °C gerührt und durch Eingießen in Methanol gefällt. Zur Reinigung fällt man das Polymer noch dreimal aus THF in Methanol um.
Ausbeute: 15,5 g (88 %).

| Elementaranalyse: | | | | |
|---|---|---|---|---|
| berechnet:<br>gefunden: | C 63,1<br>C 64,2 | H 4,88<br>H 4,95 | N 12,06<br>N 11,85 | O 19,94<br>O 19,02 |

GPC: $\overline{M}_w$ = 30500
$T_G$: 140 °C

Beispiel 3

Aus den gemäß Beispiel 1 bzw. 2 hergestellten NLO-aktiven Polymerisaten werden dünne Polymerschichten durch Spincoating 20 %iger Lösungen auf Substrate aufgebracht, die mit einer transparenten Elektrode versehen sind. Nach Beschichtung und Trocknung wird eine weitere transparente Elektrode aufgebracht. Die so hergestellten Sandwichproben werden bei der Erweichungstemperatur gepolt, anschließend auf Raumtemperatur abgekühlt und dann auf die Modulation der Doppelbrechung untersucht. Über bekannte Rechenoperationen werden die Dämpfung und die elektrooptischen Koeffizienten bestimmt. Die so hergestellten Proben zeigen gute elektrooptische Koeffizienten und sind so für die Anwendung in neuen optisch nichtlinearen Anordnungen anwendbar.

## Patentansprüche

1. Verfahren zur Herstellung von (Meth)acrylat-Polymerisaten mit seitenständigen nichtlinear optischen Chromophoren und Molekulargewichten $\overline{M}_w$ zwischen 5000 und 500000, dadurch gekennzeichnet, daß man Polymerisate des (Meth)acryloylisocyanats in polymeranaloger Reaktion in Lösung mit D-ω-Hydroxyalkyl-Chromophoren der allgemeinen Formel (I) umsetzt

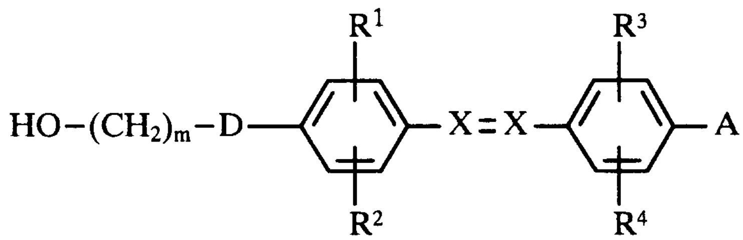

(I) ,

worin

| | |
|---|---|
| D | für einen Elektronendonor, |
| A | für einen Elektronenakzeptor, |
| $R^1$, $R^2$, $R^3$ und $R^4$ | untereinander gleich oder verschieden sein können und für H, Alkyl mit 1 bis 6 Kohlenstoffatomen, Cycloalkyl mit 5 oder 6 Kohlenstoffatomen, Alkoxy mit 1 bis 4 Kohlenstoffatomen oder $R^3$ und $R^4$ für CN, $NO_2$ oder CHO stehen oder $R^1$ mit $R^2$ bzw. $R^3$ mit $R^4$ miteinander einen anellierten Ring bilden, |
| X | für CH-Gruppen oder/und N-Atome |

und

m für eine ganze Zahl von 2 bis 11 stehen.

2. Verfahren nach Anspruch 1, dadurch gekennzeichnet, daß man als nichtlinear optische D-ω-Hydroxyalkyl-Chromophore der allgemeinen Formel (I) solche einsetzt, in denen m für eine ganze Zahl von 2 bis 8 steht.

3. Verfahren nach Anspruch 1 oder 2, dadurch gekennzeichnet, daß man nichtlinear optische D-ω-Hydroxyalkyl-Chromophore der allgemeinen Formel (I) mit Copolymerisaten aus (Meth)-acryloylisocyanat und Methacrylsäureestern umsetzt.

4. Verfahren nach Anspruch 1 oder 2, dadurch gekennzeichnet, daß man nichtlinear optische D-ω-Hydroxyalkyl-Chromophore der allgemeinen Formel (I) mit Copolymerisaten aus (Meth)-acryloylisocyanat und Acrylsäureestern umsetzt.

5. Verfahren nach einem der Ansprüche 1 bis 4, dadurch gekennzeichnet, daß man nichtlinear optische D-ω-Hydroxyalkyl-Chromophore der allgemeinen Formel (I) mit Copolymerisaten aus (Meth)-acryloylisocyanat und Adamantylacrylat oder Adamantylmethacrylat umsetzt.

6. Verfahren nach einem der Ansprüche 1 bis 5, dadurch gekennzeichnet, daß man die Umsetzung der Alkohole der allgemeinen Formel (I) mit den Polymerisaten des (Meth)acryloylisocyanats so führt, daß nach der Umsetzung noch Isocyanatfunktionen im Polymerisat vorhanden sind, die anschließend zu Urethangruppen umgesetzt werden oder über eine weitere polymeranaloge Umsetzung weiter funktionalisiert werden können.

7. Verfahren nach Anspruch 6, dadurch gekennzeichnet, daß die nach der Umsetzung im Polymerisat noch vorhandenen Isocyanatgruppen über eine weitere polymeranaloge Umsetzung mit vernetzbaren Alkoholen oder vernetzbaren Aminen zur Reaktion gebracht werden.

8. Verfahren nach Anspruch 7, dadurch gekennzeichnet, daß es sich bei den vernetzbaren Alkoholen oder vernetzbaren Aminen um solche handelt, die am alkoholischen Sauerstoff bzw. Amin-Stickstoff folgende Gruppierungen gebunden enthalten:
$H_2C=CH\text{-}CH_2\text{-}$,

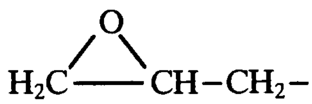,
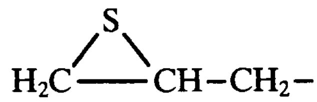,

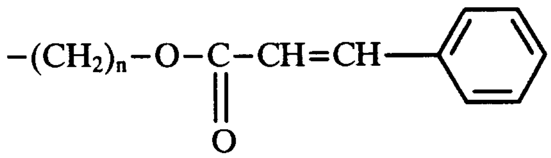,
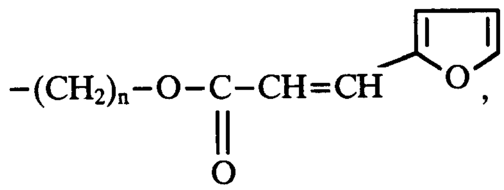,

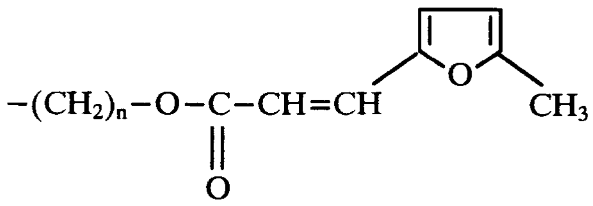, 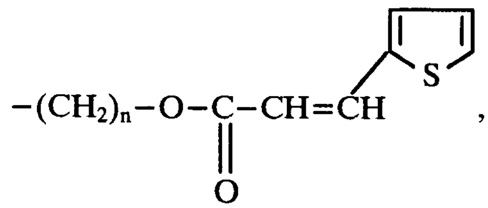,

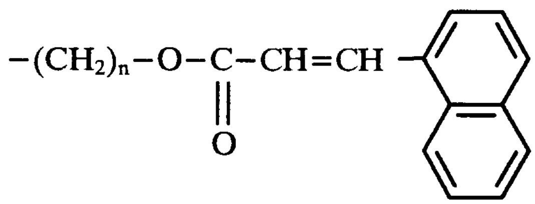, 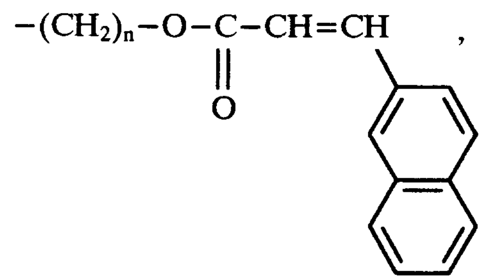,

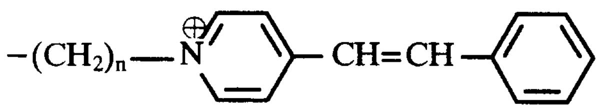,

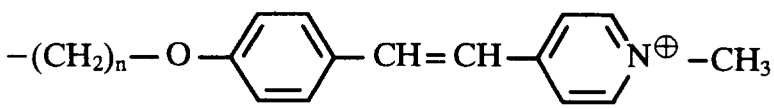,

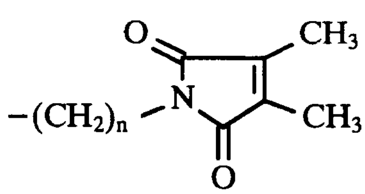, 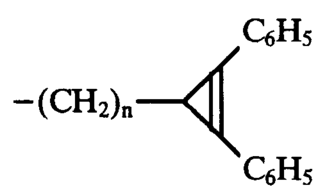,

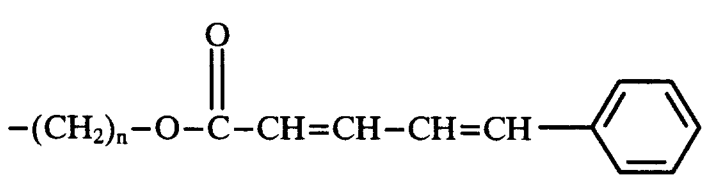

mit n = O bis 10.

**9.** Polymerisate, die wiederkehrende Einheiten der allgemeinen Formel (II) eingebaut enthalten oder hieraus aufgebaut sind,

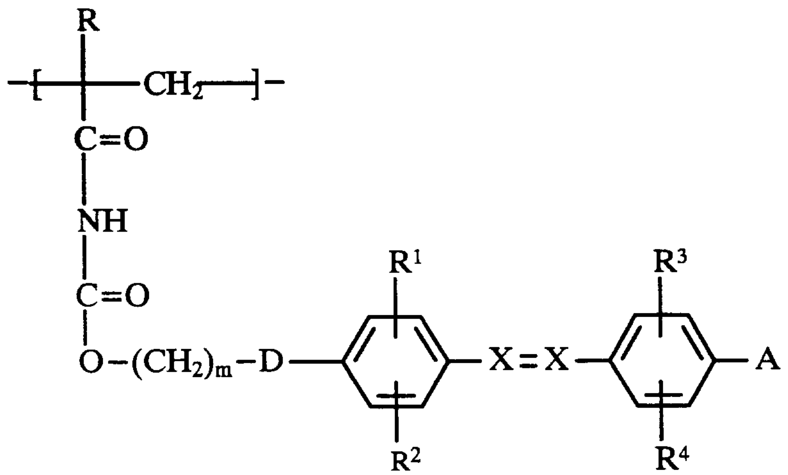

(II)

worin D, A, X, m, $R^1$, $R^2$, $R^3$ und $R^4$ die in Anspruch 1 angegebene Bedeutung haben und R für ein Wasserstoffatom oder eine Methylgruppe steht, dadurch gekennzeichnet, daß sie nach einem Verfahren gemäß einem der Ansprüche 1 bis 8 hergestellt worden sind.

**10.** Polymerisate nach Anspruch 9, dadurch gekennzeichnet, daß D für $NR^5$ oder O, -X=X- für -N=N-, -N=CH-, -CH=N- oder -CH=CH-, A für H, $NO_2$, CN, CHO,

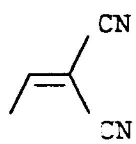 , 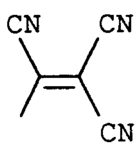 oder 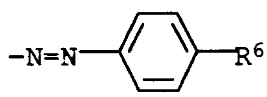 ,

$R^5$ für $C_1$-$C_6$-Alkyl oder -Alkenyl, $C_5$- bis $C_7$-Cycloalkyl, Phenyl, Benzyl, Tolyl oder eine vernetzungsfähige Gruppe und
$R^6$ für H, $NO_2$, CN oder CHO stehen.

**11.** Polymerisate nach Anspruch 10, dadurch gekennzeichnet, daß sie als vernetzungsfähige Gruppe $R^5$ eine Vinyl-, Allyl-, Methallyl-, Methacryloyl-, Acryloyl-, $-(CH_2)_n-O-CO-CH=CH_2$, $-(CH_2)_n-O-CO-C(CH_3)=CH_2$ mit n = 1 bis 8, Oxiranyl- oder Thiiranylgruppe enthalten.

**12.** Polymerisate nach einem der Ansprüche 9 bis 11, dadurch gekennzeichnet, daß sie nur aus wiederkehrenden Einheiten der allgemeinen Formel (II) aufgebaut sind.

**13.** Polymerisate nach einem der Ansprüche 9 bis 11, dadurch gekennzeichnet, daß sie zusätzlich zu den wiederkehrenden Einheiten der allgemeinen Formel (II) noch weitere wiederkehrende Comonomer-Einheiten eingebaut enthalten.

**14.** Verwendung der nichtlinear optischen Polymerisate nach einem der Ansprüche 9 bis 13, in optischen Bauelementen.

**15.** Verwendung der optischen Bauelemente nach Anspruch 14 in der Nachrichtentechnik.

Europäisches Patentamt

# EUROPÄISCHER RECHERCHENBERICHT

Nummer der Anmeldung
EP 93 11 6770

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A,D | FR-A-2 630 744 (THOMSON-CSF)<br>* Ansprüche *<br>--- | 1-15 | G02F1/35<br>C08F8/00<br>C08F8/30<br>C08F220/58<br>C09B69/10 |
| A<br><br>D | EP-A-0 244 288 (THOMSON-CSF)<br>* das ganze Dokument *<br>& FR-A-2 597 109 (ID)<br>--- | 1-15 | |
| A,D | EP-A-0 337 405 (HOECHST CELANESE CORPORATION)<br>* Ansprüche; Beispiel *<br>--- | 1-15 | |
| A,D | EP-A-0 396 172 (N.V. PHILIPS' GLOEILAMPENFABRIEKEN)<br>* Ansprüche; Abbildung 1; Beispiele *<br>--- | 1-15 | |
| A,D | JOURNAL OF POLYMER SCIENCE, POLYMER CHEMISTRY EDITION<br>Bd. 28, Nr. 1 , 15. Januar 1990 , NEW YORK US<br>Seiten 1 - 13 XP000136057<br>D.R.ROBELLO 'linear polymers for nonlinear optics. I. polyacrylates bearing aminonitro-stilbene and -azobenzene dyes'<br>* das ganze Dokument *<br>--- | 1-15 | RECHERCHIERTE SACHGEBIETE (Int.Cl.5)<br>G02F<br>C08F<br>C09B |
| A | EP-A-0 206 544 (NIPPON PAINT CO., LTD.)<br>* Ansprüche; Beispiele *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 25. Februar 1994 | Ginoux, C |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument